# EUROPÄISCHE PATENTANMELDUNG

(11) **EP 1 199 267 A1**
(43) Veröffentlichungstag der Anmeldung: **24.04.2002**
(21) Anmeldenummer: 00122725.5
(22) Anmeldetag: 18.10.2000
(51) Int. Cl.: B65G 69/18

(54) **Verfahren und Vorrichtung zum Überführen von feinkörnigem Schüttgut von einer höher gelegenen Quelle in ein tieferes Gefäss, insbesondere für eine Schüttgutverladeeinrichtung**

(71) Anmelder: BMH Claudius Peters GmbH, 21614 Buxtehude (DE)
(72) Erfinder: Hilgraf, Peter Dipl.-Ing., 22149 Hamburg (DE)
(74) Vertreter: Glawe, Delfs, Moll & Partner

(57) **Zusammenfassung**

Verfahren zum Überführen von feinkörnigem Schüttgut von einer höher gelegenen Quelle in ein tieferes Gefäß, insbesondere in einer Schüttgutverladeeinrichtung. Die Bauweise wird vereinfacht durch ungetrennte, gegensinnige Führung des Schüttguts und der verdrängten Luft innerhalb desselben Schachts (7,8,9). Dies wird dadurch ermöglicht, daß durch Anstauen des Guts vor einer Blendenöffnung (18) ein geschlossener Fallstrahl (14) des Guts gebildet wird, dessen Durchmesser wesentlich geringer ist als der Innendurchmesser des Schachts (7,8,9).

## Beschreibung

Läßt man feinkörniges Schüttgut in Form eines Stroms fallen, so fächert dieser sich auf, wobei Staub in die umgebende Luft übertritt. Will man feinkörniges Schüttgut von einer höher gelegenen Quelle in ein tiefer angeordnetes Gefäß fallen lassen, so verwendet man dafür einen Schacht, der den Übertritt von Staub in die Umgebung vermeidet. Die in dem Gefäß durch das Schüttgut verdrängte Luft fängt man auf und führt sie durch einen separaten Leitungsquerschnitt einem Filter zu. Schüttgutverladeeinrichtungen umfassen einen solchen Fallschacht für das Schüttgut, der zwei ineinander liegende Rohre oder Schläuche aufweist, von denen der innere zur Führung des Schüttguts nach unten in das Gefäß und der äußere zur gegensinnigen Abführung der verdrängten Luft dient (EP-A 676347, DE-C 1218941, DE-A 2701343, DE-A 2821210). Die Verwendung zweier durch eine Wand getrennter Rohrquerschnitte für das Schüttgut und das Gas ist offensichtlich notwendig, weil andernfalls das im Gegenstrom zum Schüttgut strömende Gas einen wesentlichen Teil des Feinanteils des Schüttguts übernehmen und abführen würde. Jedoch ist die doppelte Rohranordnung aufwendig, zumal dann, wenn sie längenveränderbar sein soll.

Dies ist häufig notwendig, um eine Beladegarnitur an die Höhendifferenz zwischen der Schüttgutquelle und dem aufnehmenden Gefäß, beispielsweise dem Behältereinlaß eines Fahrzeugs, anzupassen.

Die Erfindung erreicht eine Vereinfachung durch die Merkmale des Anspruchs 1 und vorzugsweise auch diejenigen der Unteransprüche. Sie gestattet, die ungetrennte, gegensinnige Führung des Schüttguts und des verdrängten Gases in einer und derselben Leitung. Dies verdankt sie der Feststellung, daß das Schüttgut dann in Form eines im wesentlichen geschlossenen Fallstrahls bleibt, wenn es zunächst gestaut wird und dann durch eine im wesentlichen horizontale Blende und im Anschluß an diese berührungsfrei fallen gelassen wird, während das verdrängte Gas durch denselben Schacht in entgegengesetzter Richtung abgeführt wird.

Durch das Anstauen des Guts vor der Bildung des Fallstrahls erreicht man zum einen, daß sämtliche Partikeln zunächst zur Ruhe kommen, bevor sie gemeinsam in den Fall übergehen. Sie haben die gleiche Bewegungsrichtung und -geschwindigkeit und streben daher nicht in verschiedene Richtungen auseinander. Zum anderen erreicht man dadurch, daß ein wesentlicher Teil der Luft zwischen den Partikeln während des Aufstauens entweicht und diese zu einer dichteren Packung zusammenfinden. Je weniger Luft zwischen den insbesondere im Randbereich des Fallstrahls befindlichen Partikeln sich befindet, umso unwahrscheinlicher ist es, daß sie von Wirbeln des Fallstrahl/Luft-Grenzbereichs erfaßt und aus dem Fallstrahl herausgerissen werden.

Damit alle in einem horizontalen Querschnitt befindlichen Partikeln im wesentlichen gleichzeitig aus dem angestauten Zustand in den Fallzustand übergehen können, wird die Fallöffnung von einer Blende gebildet. Eine Blende ist die Verengung eines Strömungsquerschnitts, hinter welcher sich eine plötzliche, allseitige Erweiterung befindet. Ferner ist eine Blende dadurch charakterisiert, daß sie allseits enger ist als der vor (über) ihr befindliche Strömungsquerschnitt. Schließlich ist bei einer Blende der die Öffnung einschließende Rand in Strömungsrichtung kurz ausgebildet im Verhältnis zum Öffnungsdurchmesser. Zu diesem Zweck soll der die Blendenöffnung (d.h. den engsten Querschnitt) bildende Rand allseits eine Höhe von weniger als einem Fünftel des mittleren Öffnungsdurchmessers, zweckmäßigerweise weniger als einem Zehntel der kleinsten Öffnungsquerabmessung aufweisen. Vor der Blende sollen Bauteile vermieden werden, die das Geschwindigkeitsprofil des strömenden Schüttguts verzerren können. Zumindest in einem Bereich unmittelbar vor der Blende, d.h. in einem Abstand, der mindestens so groß ist wie der Durchmesser der Blendenöffnung (vorzugsweise mindestens dreimal so groß), ist der Strömungsquerschnitt, in welchem das Gut angestaut wird, rotationssymmetrisch gleichmäßig um die Achse der Blendenöffnung verteilt. Schließlich soll die Blende (d.h. der die Blendenöffnung begrenzende Rand) in einer Horizontalebene angeordnet sein. Geringe Abweichungen von der horizontalen Anordnung schaden nicht. Sie sollen (je nach den Anforderungen an die Geschlossenheit des Fallstrahls) nicht über 25°, vorzugsweise nicht über 15° hinausgehen.

Die Geschlossenheit des Strahls bleibt umso länger erhalten, je geringer die Geschwindigkeitsdifferenz zu dem benachbart entgegenströmenden Gas ist. Sie soll in der Regel nicht größer als 10 m/sec. sein, vorzugsweise auch nicht größer als 3 m/sec. Dies gilt im Hauptfallbereich und darüber. Je mehr sich der Strahl seinem Ziel nähert, eine umso größere Geschwindigkeitsdifferenz kann man zulassen.

Die Geschlossenheit des Strahls ist auch umso besser, je dichter der Fallstrom ist. Er wird zweckmäßigerweise auf eine Auslaufdichte von mindestens etwa 80 %, vorzugsweise 90 %, der Schüttdichte angestaut. Die Schüttdichte ist die Dichte, die das Gut annimmt, wenn es auf einer unbelüfteten Bodenfläche ruht. Der Stauraum wird ohne Belüftungseinrichtungen für das angestaute Gut ausgeführt, wenn dessen Fließverhalten dies gestattet. Jedoch kann in manchen Fällen auch eine geringe Belüftung des Guts stattfinden.

Bei Einhaltung dieser Grenzen stellt man fest, daß der Fallstrahl sich wie ein fallender Wasserstrahl mit zunehmender Fallgeschwindigkeit seitlich zusammenschnürt, weil der geringe Abstand zwischen benachbart fallenden Partikeln den Eintritt von Luft aus der Nachbarschaft hemmt.

Je geringer der Strahlumfang im Verhältnis zur eingeschlossenen Querschnittsfläche ist, umso geringer ist der Staubanteil, der aus der Strahloberfläche in die Umgebung übertritt. Die Form des Strahlquerschnitts wird von der Form der Blende bestimmt. Die Kennzahl U²/4πF der Blendenöffnung soll so wenig wie möglich über der Zahl 1 liegen, die dem Kreisquerschnitt zugeordnet ist. Darin sind U die Umfangslänge und F die Querschnittsfläche der Blendenöffnung. Diese Kennzahl liegt zweckmäßigerweise nicht höher als 2,5 und vorzugsweise unter 1,4.

Sehr häufig wird verlangt, daß der Fallstrom veränderbar ist. Man kann zu diesem Zweck vor dem Stauraum ein Absperrorgan anordnen, das so weit von der Blende entfernt ist, daß der angestrebte Ruhezustand des Guts vor der Blende nicht gestört wird. Voraussetzung dafür ist, daß die Mindestdurchlaßmenge des Absperrorgans nicht kleiner ist als die geringste Blendenauslaufmenge bei niedrigstem Füllstand im Stauraum. Im allgemeinen zweckmäßiger ist es deshalb, die Blende selbst als Dosierorgan zu verwenden. Da sie wegen der andernfalls zu befürchtenden Störung des Strömungszustands nicht als Ventil oder Hahn ausgebildet werden kann, wird sie zweckmäßigerweise als Irisblende oder Schieberblende ausgebildet.

Die Querschnittsfläche des Schachts sollte in demjenigen Bereich, in welchem Gut und Gas ungetrennt strömen, mindestens 1,4 mal so groß sein wie die Blendenöffnung, vorzugsweise mindestens 1,6 mal so groß. Am unteren Ende des Schachts können diese Grenzwerte unterschritten werden, falls die Anpassung an eine enge Öffnung des zu füllenden Gefäßes dies erforderlich macht. Der Abstand der Schachtwand von der vertikalen Projektion der Blendenöffnung ist zweckmäßigerweise mindestens halb so groß wie der kleinste Durchmesser der Blendenöffnung. Zweckmäßigerweise ist er mindestens um den Faktor 1,4 größer als der Durchmesser der Blendenöffnung.

Die geschlossene Oberfläche des Fallstrahls kann besonders durch eine Gasströmung quer zur Fallrichtung gestört werden. Mit einer Querströmung muß in demjenigen Bereich des Schachts gerechnet werden, in welchem das Gas aus diesem seitlich abgeführt wird. Es kann deshalb in diesem Bereich eine Wand vorgesehen sein, die die Strahloberfläche vor dieser Querströmung schützt. Dies kann ein Rohrstück sein, das zwischen dem Fallstrahlquerschnitt und dem Gasströmungsquerschnitt im Bereich der Gasabzugsöffnung und ein wenig unterhalb derselben angeordnet ist. Nach dem Verständnis des Erfindungsgedankens muß eine solche Wand einen hinreichenden Abstand von der vertikalen Projektion der Blendenöffnung haben, um nicht ihrerseits die Oberfläche des Fallstrahls zu stören. Derartige Vorkehrungen können auch am unteren Ende des Fallschachts getroffen werden, um zu gewährleisten, daß das aus dem Gefäß in den Schacht einströmende Gas möglichst gleichmäßig um die vertikale Projektion der Blendenöffnung verteilt wird.

Die Vorteile der Erfindung zeigen sich im besonderen Maße bei einer Schüttgutverladeeinrichtung. Ein Ausführungsbeispiel einer solchen Einrichtung wird im folgenden unter Bezugnahme auf die schematische Zeichnung erläutert. Darin zeigen:
- Fig. 1: eine erste Ausführungsform der Einrichtung im schematischen Längsschnitt,
- Fig. 2: eine zweite Ausführungsform in entsprechender Darstellung,
- Fig. 3: einen Längsschnitt durch eine Blende und
- Fig. 4: eine Draufsicht auf die Blende.

Die Verladeeinrichtung umfaßt einen Behälter 1, der in nicht gezeigter Weise von einer Tragstruktur gehalten ist. Er kann stationär oder in einer oder zwei Horizontalrichtungen verfahrbar angeordnet sein, um über der Füllöffnung beispielsweise eines Lastwagenbehälters positioniert werden zu können. Er weist in seinem oberen Bereich eine Zufuhröffnung 2 auf, der das zu verladende Schüttgut zugeführt wird. Geeignete Zufuhreinrichtungen sind bekannt. Er weist in seinem oberen Bereich ferner eine Luftabzugsöffnung 4 auf, die dazu dient, die mit dem Schüttgutstrom 3 in den Behälter 1 eingetragene Luft (oder ein sonstiges Gas) zu einer Filtereinrichtung abzuziehen.

Der Unterteil des Behälters ist als Trichter 5 geformt, der in einen zylindrischen Teil 6 übergeht. Daran schließt sich ein Fallschacht an, dessen oberes Ende von einem zylindrischen Teil 7 gebildet wird, an den ein Balg 8 etwa desselben Durchmessers angeschlossen ist. An das untere Ende des Balgs 8 ist ein sich trichterförmig verengendes Mundstück 9 angeschlossen. Dies ist in bekannter Weise passend zu der Größe gängiger Füllöffnungen ausgebildet, von denen eine schematisch bei 10 angedeutet ist. Es wird von dem Teil 11 eines ansonsten nicht gezeigten Behälters gebildet. Die Achse 12 der bis hierher beschriebenen Anordnung hat man sich vertikal vorzustellen.

Der Balg 8 gestattet es, das Mundstück 9 mit bekannten, nicht dargestellten Mitteln zu heben und zu senken, wie es der jeweilige Betriebsfall erfordert.

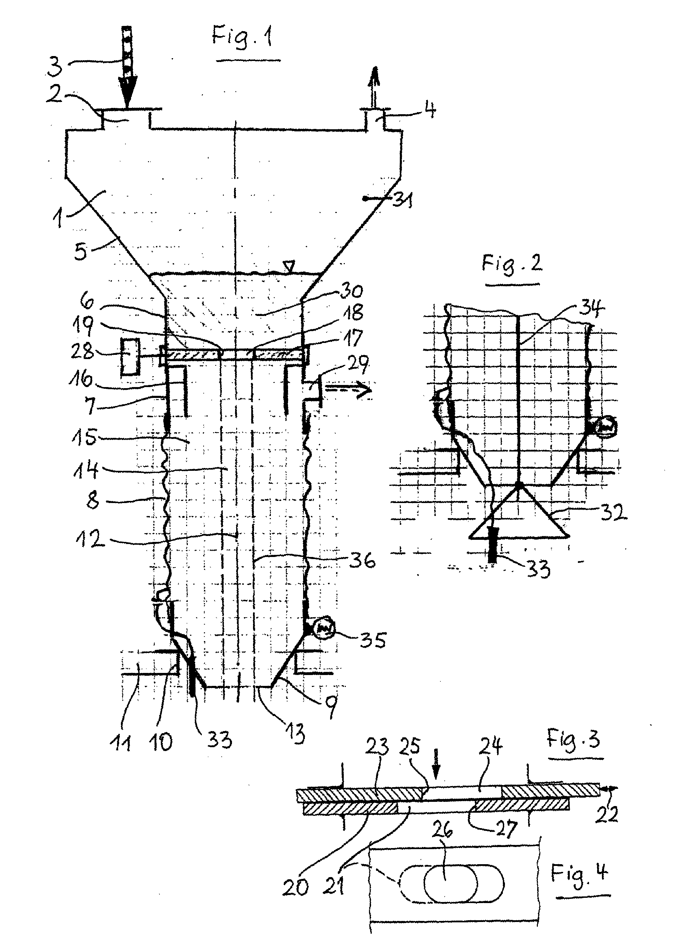

Zwischen den zylindrischen Teilen 6 und 7 unterhalb des Behälters 1 befindet sich eine Blende 17. Diese ist im einfachsten Fall als horizontale Blechscheibe mit einer mittigen Öffnung 18 ausgebildet. Diese Ausführung ist dann zweckmäßig, wenn der Zustrom 3 des zu verladenden Schüttguts dosiert werden kann oder wenn - wie in Figur 2 angedeutet - ein an sich bekannter Verschlußkonus 32 vorgesehen ist, der öffnend und verschließend mit dem Öffnungsrand des Mundstücks 9 zusammenwirkt. Die Höhe des die Blendenöffnung bildenden Rands 19 soll möglichst gering sein im Verhältnis zum Durchmesser der Blendenöffnung 18. Falls der die Blendenöffnung bildende Bauteil 17 dicker ist, als es für die Höhe des Randes wünschenswert ist, kann eine niedrige Randhöhe durch entsprechende Anfasung bewirkt werden.

Statt einer solchen unveränderlichen Blende kann auch eine ganz oder teilweise schließbare Blende vorgesehen werden, die beispielsweise in der in Figur 3 und 4 angedeuteten Weise als Schieber ausgebildet ist. In Anlage an einer stationären Schieberplatte 20 mit einer ersten Öffnung 21 ist eine in Pfeilrichtung 22 bewegliche Schieberplatte 23 mit einer zweiten Öffnung 24 vorgesehen. Die Öffnungen 21, 24 sind langgestreckt mit übereinstimmender Längsachse ausgebildet. Je nach Stellung der beweglichen Schieberplatte 23 kann der von den Öffnungen 21, 24 gebildete freie Öffnungsquerschnitt 26 verändert werden. Die Öffnungen 21, 24 sind so ausgebildet, daß in derjenigen Schieberstellung, die im Verladevorgang meistens verwendet wird, die freie Querschnittsöffnung 26 einem Kreisquerschnitt nahekommend begrenzt ist. Dieser Öffnungsquerschnitt befindet sich genau mittig in bezug auf die Längsachse 10 der Anordnung. Für den Fall einer größeren Verladeleistung kann der Querschnitt auch größer eingestellt werden, indem die Schieberplatte 23 nach links (in der Zeichnung) bewegt wird. Durch Verschieben in der Gegenrichtung kann die Öffnung verkleinert werden.. Um ein Nachlaufen von angesammeltem Material am Schluß des Ladevorgangs zu vermeiden, kann die Öffnung auch gänzlich geschlossen werden. Zum Betätigen des Schiebers ist ein Stellmotor 28 vorgesehen.

Die Blendenöffnung 26 wird bei dieser Ausführung durch Ränder 25, 27 begrenzt, die sich in unterschiedlicher Höhe befinden. Solange die Höhendifferenz hinreichend klein ist, wirkt sich dies auf die Geschlossenheit des Fallstrahls nicht wesentlich aus.

Am unteren Ende des Balgs 8 kann ein Rüttler 35 angeordnet sein, der am Schluß des Beladevorgangs den Staub abschüttelt, der sich im Balg 8 und im Mundstück 9 abgesetzt haben mag. Ferner kann eine Füllstandsmeßeinrichtung 33 vorgesehen sein.

Der unterhalb der Blende 17 befindliche zylindrische Teil 7, der Balg 8 und das Mundstück 9 bilden den Schacht, in welchem der von der Blendenöffnung 18 gebildete Fallstrahl 14 des zu verladenden Schüttguts mittig abwärts strömt. Der Strahldurchmesser, der im wesentlichen durch die vertikale Projektion der Blendenöffnung 18 begrenzt ist, hat einen mehrfach kleineren Durchmesser als der Schacht. Innerhalb des Schachts und außerhalb des Fallstrahls 14 befindet sich daher ein großer freier Querschnitt 15 zur gegensinnigen Führung des verdrängten Luftstroms zu einer am oberen Ende des Schachts 7,8,9 in dem zylindrischen Teil 7 befindlichen Luftabzugsöffnung 29. Auch die Öffnung 13 des Mundstücks 9 hat einen wesentlich größeren Durchmesser als die vertikale Projektion der Blendenöffnung 18. Jedoch schadet es nicht, wenn in der Mundstücköffnung der Durchmesser etwas kleiner ist als im sonstigen Schacht, da eine hier durch größere Luftgeschwindigkeit möglicherweise verursachte, stärkere Auflösung der Strahloberfläche nicht mehr von Belang ist. Die Mundstücköffnung 13 ist auch so groß, daß der Fallstrahl auch dann in der Regel den Rand der Mundstücköffnung 13 nicht erreicht, wenn das Mundstück 9 mit dem unteren Teil des Balgs 8 ungewollt in Horizontalrichtung, abweichend von der Vertikalachse 12, verschoben wird. Derjenige Bereich des Schachts 7,8,9 oberhalb der durch das Mundstück 9 gebildeten Verengung kann als Hauptfallbereich bezeichnet werden.

Im oberen Schachtbereich innerhalb des zylindrischen Teils 7 bei der Luftabzugsöffnung 29 ist ein Kragen 16 konzentrisch eingebaut, der die Luftabzugsöffnung 29 vom zentralen Bereich des Schachts trennt. Dieser Kragen befindet sich in beträchtlicher radialer Entfernung vom Fallstrahl 14. Er bewirkt, daß die abzuziehende Luft zunächst vom Fallstrahl weg in den Ringraum zwischen dem Kragen 16 und der zylindrischen Wand 7 gezogen wird und ihre Bewegungskomponente in Umfangsrichtung zu der Öffnung 29 hin sich auf die Fallstrahloberfläche 36 praktisch nicht auswirkt.

Wenn für den Verschluß der Verladeeinrichtung gemäß Figur 2 ein Verschlußkonus 32 vorgesehen ist, ist dieser an einem zentral angeordneten Hubseil 34 aufgehängt, das also zentral innerhalb des Fallstrahls 14 liegt. Da es in Abstand von der Strahloberfläche 36 geführt ist, beeinträchtigt es deren Geschlossenheit nicht bzw. nicht wesentlich. Mittels des Seils 34 kann das Mundstück im geschlossenen Zustand angehoben werden. Eine besondere Hubeinrichtung für das Mundstück 9 bzw. den Balg 8 ist dann nicht erforderlich. Andere Ausführungsvarianten sind denkbar.

Die Erfindung gestattet es, den Fallstrahl 14 über beträchtliche Höhendifferenzen ungetrennt von dem verdrängten Gas einer Füllöffnung 10 zuzuführen. In jedem Fall ist die Höhendifferenz vielfach größer als der Strahldurchmesser. Sie beträgt in der Regel ein bis mehrere Meter.

Im unteren Teil des Behälters 1 wird das Gut als Schüttung 30 angestaut und verliert es den größten Teil seines Luftgehalts, der durch die Öffnung 4 abgezogen wird. Dabei kommt es zur Ruhe oder in einen im Vergleich mit dem vorherigen Förderzustand sehr langsamen Bewegungszustand mit einem rotationssymmetrischen Bewegungsprofil. Erreicht es die Blendenöffnung 18, fällt es über deren gesamte Querschnittsweite im wesentlichen gleichzeitig und gleichmäßig herab.

Die Wände 5, 6, die den Behälter 1 in seinem unteren Bereich begrenzen, sind im dargestellten Beispiel unbelüftet ausgeführt. Jedoch kann eine schwache Bodenbelüftung geduldet werden, wenn andernfalls das notwendige Fließverhalten nicht gewährleistet ist.

Der Schüttgutzufluß 3 wird zweckmäßigerweise so geregelt, daß die Menge des im Behälter 1 angestauten Schüttguts 29 so groß ist, daß die Strahlbildung an der Blendenöffnung 18 durch Zulaufschwankungen oder Niveau-Ungleichmäßigkeiten nicht mehr beeinflußt wird. Außerdem kann der Zustrom so geregelt werden, daß die Stauzeit hinreicht, um den Luftgehalt im angestauten Schüttgut hinreichend zu vermindern. In manchen Fällen kann es auch zweckmäßig sein, die Stauzeit so zu begrenzen, daß immerhin noch so viel Luft innerhalb des Schüttguts verbleibt, daß dessen Fließverhalten dadurch begünstigt wird.

## Patentansprüche

1. Verfahren zum Überführen von feinkörnigem Schüttgut von einer höher gelegenen Quelle in ein tieferes Gefäß unter Verdrängung und Abführung von Gas, **dadurch gekennzeichnet, daß** das Schüttgut gestaut und durch eine insbesondere horizontale Blende berührungsfrei in das Gefäß fallen gelassen wird, während das verdrängte Gas durch denselben Schacht in entgegengesetzte Richtung abgeführt wird.

2. Verfahren nach Anspruch 1, **dadurch gekennzeichnet, daß** die Geschwindigkeitsdifferenz zwischen Gut und Gas im Hauptfallbereich und oberhalb desselben nicht größer als 10 m/sec. ist.

3. Verfahren nach Anspruch 1 oder 2, **dadurch gekennzeichnet, daß** das Gut auf eine Auslaufdichte von mindestens 80 % der Schüttdichte angestaut wird.

4. Vorrichtung zum Überführen von Schüttgut von einer höher gelegenen Quelle (3) in ein tiefer gelegenes Gefäß (11) und zum Abführen des aus dem Gefäß (11) verdrängten Gases unter Verwendung eines vertikalen Schachts (7,8,9), der einen Fallquerschnitt (14) für das Schüttgut und einen diesen umgebenden Gasführungsquerschnitt (15) enthält, **dadurch gekennzeichnet, daß** der Fallquerschnitt (14) und der Gasführungsquerschnitt (15) des Schachts (7,8,9) mindestens in einem wesentlichen Teil seiner Länge ungetrennt sind, daß dem Schacht (7,8,9) ein Stauraum (1) vorgeschaltet ist, der zum Schacht (7,8,9) hin eine Blendenöffnung (18) bildet, und daß der Schacht (7,8,9) im Anschluß an die Blendenöffnung 18 keine den Fallquerschnitt berührenden Bauteile enthält.

5. Vorrichtung nach Anspruch 4, **dadurch gekennzeichnet, daß** die Kennzahl U²/4πF kleiner als 2,5 ist (U = Umfangslänge; F = Querschnittsfläche).

6. Vorrichtung nach Anspruch 5, **dadurch gekennzeichnet, daß** die Blendenöffnung (18) kreisförmig begrenzt ist.

7. Vorrichtung nach einem der Ansprüche 4 bis 6, **dadurch gekennzeichnet, daß** die Blendenöffnung (18) verstellbar ist.

8. Vorrichtung nach Anspruch 7, **dadurch gekennzeichnet, daß** die Blende (17) als Irisblende ausgebildet ist.

9. Vorrichtung nach Anspruch 7, **dadurch gekennzeichnet, daß** die Blende (17) als Schieberblende ausgebildet ist.

10. Vorrichtung nach einem der Ansprüche 4 bis 9, **dadurch gekennzeichnet, daß** der Stauraum (1) unbelüftet ist.

11. Vorrichtung nach einem der Ansprüche 4 bis 10, **dadurch gekennzeichnet, daß** der Stauraum (1) sich allseits zum Rand der Blendenöffnung (18) hin verengt.

12. Vorrichtung nach einem der Ansprüche 4 bis 11, **dadurch gekennzeichnet, daß** der die Blendenöffnung (18) bildende Rand (19) allseits eine Höhe von weniger als einem Fünftel des mittleren Öffnungsdurchmessers hat.

13. Vorrichtung nach einem der Ansprüche 4 bis 12, **dadurch gekennzeichnet, daß** die Blendenöffnung (18) an ihrer unteren Randkante ihre geringste Weite hat.

14. Vorrichtung nach einem der Ansprüche 4 bis 13, **dadurch gekennzeichnet, daß** sich der Querschnitt des Schachts (7,8,9) unterhalb der Blendenöffnung (18) sprunghaft erweitert.

15. Vorrichtung nach einem der Ansprüche 4 bis 14, **dadurch gekennzeichnet, daß** die Querschnittsfläche des Schachts (7,8,9) in dem Bereich, in welchem Gut und Gas ungetrennt strömen, mindestens 1,4 mal so groß ist wie die Blendenöffnung (18).

16. Vorrichtung nach einem der Ansprüche 4 bis 15, **dadurch gekennzeichnet, daß** der Abstand der Schachtwand von der vertikalen Projektion (36) der Blendenöffnung (18) mindestens halb so groß ist wie der kleinste Durchmesser der Blendenöffnung (18).

17. Vorrichtung nach einem der Ansprüche 4 bis 16, **dadurch gekennzeichnet, daß** eine am Schacht (7,8,9) vorgesehene Gasabzugsöffnung (29) durch eine Wand (16) von der vertikalen Projektion (36) der Blendenöffnung (18) getrennt ist.

18. Vorrichtung nach Anspruch 17, **dadurch gekennzeichnet, daß** die Wand (16) ein Ringkragen ist.

19. Vorrichtung nach einem der Ansprüche 4 bis 18, **dadurch gekennzeichnet, daß** der Luftzulaß im Mundstück (9) des Schachts (7,8,9) gleichmäßig um die vertikale Projektion (36) der Blendenöffnung verteilt ist.

20. Vorrichtung nach einem der Ansprüche 4 bis 19, **dadurch gekennzeichnet, daß** sie Teil einer Schüttgutverladeeinrichtung ist.
